# EUROPÄISCHE PATENTSCHRIFT

(11) **EP 1 363 053 B1**
(45) Veröffentlichungstag und Bekanntmachung des Hinweises auf die Patenterteilung: **02.11.2006**
(21) Anmeldenummer: 03010719.7
(22) Anmeldetag: 13.05.2003
(51) Int. Cl.: F16K 17/30, G05D 16/10

(54) **Sicherheitsvorrichtung für Wasserleitungen**
Safety device for water pipes
Dispositif de sécurité pour des conduites d'eau

(30) Priorität: 16.05.2002 ES 200201107
(43) Veröffentlichungstag der Anmeldung: 19.11.2003
(73) Patentinhaber: Valvulas Arco, S.L., 46134 Foyos (Valencia) (ES)
(72) Erfinder: Azcue Eizmendi, Juan Angel, 20009 San Sebastian, Guipuzcoa (ES)
(74) Vertreter: Feldkamp, Rainer

(56) Entgegenhaltungen:
- DE-A- 2 115 290
- FR-A- 1 501 960
- US-A- 2 656 855
- US-A- 4 655 245
- US-B1- 6 374 852

## Beschreibung

### Gebiet der Erfindung

Diese Erfindung bezieht sich auf eine Sicherheitsvorrichtung der im Oberbegriff des Anspruchs 1 genannten Art, siehe z.B. die DE-OS-2 115 290.

Eine derartige Sicherheitsvorrichtung ist dazu bestimmt, sicherzustellen, daß in einer Wasserleitung strömungsabwärts von der Sicherheitsvorrichtung kein Druck oberhalb eines vorher festgelegten Wertes auftritt, derart, daß Geräte (Haushalts-Elektrogeräte, Industriemaschinen usw.) und Leitungen, die hinter der Vorrichtung vorhanden sind, gegen gefährliche Wasserüberdrücke geschützt werden, so daß ihre mechanische Unversehrtheit und korrekte Betriebsweise sichergestellt wird.

### Stand der Technik

Obwohl es Normen gibt, nach denen der Speisedruck einer Wasserleitung einen vorgegebenen Wert nicht übersteigen darf, ergibt sich ziemlich häufig der Fall, daß diese Normen aufgrund der technischen Bedingungen in den Transport- und Zuführungsleitungen sowie aufgrund der Eigenschaften von Gebäuden, in denen der Verbrauch erfolgt, nicht erfüllt wird. Die Transportentfernungen, die bei der Zuführung zu erwartenden Leitungsverluste und die Höhenlage der Verbrauchsstelle sind Ursachen dafür, daß der Versorgungsdruck an der Verbrauchsstelle nicht ausreichend kontrolliert werden kann. In vielen Fällen übersteigt er in gefährlicher Weise den empfohlenen Wert, was zu einem Bersten der Zuführungsleitungen oder der inneren Kreise der Geräte führt (Kühlschränke, Waschmaschinen, Heizungskessel, Wärmetauscher, usw.), mit schwerwiegenden Schadensfolgen oder einer Unbenutzbarkeit der Geräte, Überschwemmungen, körperlichen Gefahren für Personen, die sich in der Nähe befinden, durch einen Aufprall oder Verbrennungen usw. Beispielsweise ist es in dem ersten und dem zwanzigsten Stockwerk eines Gebäudes üblich, daß der Speisedruck in dem ersten Stockwerk so hoch ist, daß sichergestellt ist, daß diese Speisung im zwanzigsten Stockwerk noch ausreichend ist, und es ist dennoch möglich, daß in beiden Stockwerken jeweilige Geräte mit gleichen Eigenschaften installiert sind, die logischerweise mit Wasserdrücken mit unterschiedlichem Wert gespeist werden.

Es sind selbstverständlich bereits Regelvorrichtungen bekannt, die zur Lösung dieses Problems bestimmt sind. Dennoch leiden die bekannten Vorrichtungen an zwei Arten von Hauptnachteilen: einerseits sind dies einen großen Raumbedarf aufweisende Vorrichtungen, die schwierig unterzubringen sind, eine erhebliche Installationsarbeit erfordern und kostspielig sind; und andererseits sind sie so ausgelegt, daß sie ihre Regelfunktion erfüllen, während das Wasser fließt (dynamische oder Verbrauchsphase) während sie bei fehlender Wasserzirkulation (statische Phase oder Phase ohne Verbrauch) keine Sperre gegen den Wasserdruck bilden, der in dem Wasser in der betreffenden Leitung auftritt, so daß, wenn dieser Druck über den zulässigen Druck ansteigt, dieser immer noch auf die Leitung strömungsabwärts von der Regelvorrichtung übertragen wird, mit allen bereits erwähnten Unfallgefahren.

Der Erfindung liegt die Aufgabe zugrunde, eine Sicherheitsvorrichtung der eingangs genannten Art zu schaffen, die bei einfachem und zuverlässigem Aufbau einen sicheren Schutz gegen einen Überdruck selbst dann ergibt, wenn in der Leitung kein Wasser strömt.

Diese Aufgabe wird durch die im Anspruch 1 angegebenen Merkmale gelöst.

Vorteilhafte Ausgestaltungen und Weiterbildungen ergeben sich aus den Unteransprüchen.

Die erfindungsgemäße Sicherheitsvorrichtung umfaßt einen rohrförmigen Körper, der an seinen Enden mit Verbindungseinrichtungen für eine erste strömungsaufwärts gelegene Wasserleitung und eine zweite strömungsabwärts gelegene Wasserleitung versehen ist, wobei der rohrförmige Körper in seinem Inneren strömungsaufwärts einen rohrförmigen Kolben und strömungsabwärts ein mit Öffnungen versehenes Verschlußelement aufweist, die unabhängig voneinander gleitend und abgedichtet beweglich gegenüber dem rohrförmigen Körper eingebaut sind. Der rohrförmige Kolben ist gegen eine erste strömungsaufwärts gelegene Druckfeder angeordnet und weist eine Kolbenstange auf, die strömungsaufwärts gleitend beweglich im Inneren einer Abdeckkappe angeordnet ist, die in den rohrförmigen Körper eingesetzt ist und strömungsaufwärts einen geschlossenen Boden und seitliche Bohrungen aufweist, die mit der ersten Wasserleitung verbunden sind und die an ihrem strömungsabwärts gelegenen Ende mit der Ruhestellung oder der am weitesten strömungsabwärts gelegenen Stellung des freien Endes der Kolbenstange des rohrförmigen Kolbens ausgerichtet sind, der einen Betriebshub aufweist, der größer als die seitlichen Bohrungen ist, wobei strömungsabwärts von den seitlichen Bohrungen eine erste O-Ring-Dichtung eingefügt ist, die an dem Boden der Abdeckkappe eingesetzt ist. Das mit Öffnungen versehene Verschlußelement ist gegen eine zweite strömungsabwärts gelegene Druckfeder eingebaut und weist eine Verschlußfläche auf, die über eine in diese eingefügte O-Ring-Dichtung gegenüber einem Durchlaß des rohrförmigen Körpers wirkt, der mit der zweiten Wasserleitung verbunden ist, wobei das mit Öffnungen versehene Verschlußelement seitliche Öffnungen aufweist, die mit der zweiten Wasserleitung über den Durchlaß des rohrförmigen Körpers in Verbindung stehen. Der rohrförmige Körper, der rohrförmige Kolben, das mit Öffnungen versehene Verschlußelement und die Abdeckkappe begrenzen im Inneren eine Druckkammer, die gleichzeitig mit den ersten und zweiten Wasserleitungen über die seitlichen Bohrungen, die seitlichen Öffnungen und dem Durchlaß in Verbindung steht. Die ersten und zweiten Druckfedern sind entsprechend den jeweiligen vorher festgelegten Wasserdrücken in der Kammer ausgelegt, wobei die erste Feder für einen Wasserdruck P2 kleiner als ein Wasserdruck P1 mit einem maximalen durch die Norm festgelegten Wert ausgelegt ist, während die zweite Feder für einen Wasserdruck P3 mit einem Wert oberhalb von P2 und kleiner dem maximal zulässigen Wert für die Elemente der Wasserleitung strömungsabwärts ausgelegt ist. Gemäß einer bevorzugten Ausführungsform weist die Abdeckkappe einen vieleckigen Umriß auf, wobei in den ebenen Seiten hiervon die seitlichen Bohrungen angeordnet sind.

Diese Konstruktion der erfindungsgemäßen Vorrichtung ergibt eine sowohl einfache als auch wirkungsvolle und zuverlässige Funktionsweise. In der dynamischen Phase gelangt das über die erste Wasserleitung zugeführte Wasser über die seitlichen Bohrungen der Abdeckkappe in die Druckkammer, verläßt diese Kammer über die seitlichen Öffnungen des mit Öffnungen versehenen Verschlußelementes und strömt dann durch den Durchlaß strömungsabwärts von dem rohrförmigen Körper. Wenn der Druck in der Druckkammer den Wert übersteigt, für den die erste Druckfeder ausgelegt ist, wird der rohrförmige Kolben strömungsaufwärts verschoben, wodurch fortschreitend die seitlichen Bohrungen der Abdeckkappe verschlossen werden, wodurch der Druck in der Druckkammer verkleinert wird und die Druckfeder den rohrförmigen Kolben strömungsabwärts bewegt. Auf diese Weise wird nachfolgend im Inneren der Druckkammer und in dem Bereich strömungsabwärts der Vorrichtung ein Wasserdruck in einem Bereich aufrechterhalten, der dem vorher festgelegten Wert entspricht und den wir mit P2 bezeichnet haben, der kleiner als ein Wasserdruck P1 ist, der über die erste Wasserleitung zugeführt wird, und von dem wir annehmen, daß er mit dem durch gesetzliche Normen in dieser Hinsicht festgelegten maximal zulässigen Wert übereinstimmt. Wenn dann der Verbrauch beendet wird (die Strömung strömungsabwärts von der Vorrichtung wird unterbrochen) gelangt man in die statische Phase, in der sich immer noch ein Wasserdruck in der Kompressionskammer mit dem Wert P1 der Speisung befindet, was dazu führt, daß sich der rohrförmige Kolben an das Ende seines strömungsaufwärts gelegenen Hubes bewegt hat, wodurch ein dichter Verschluß gegen die erste O-Ring-Dichtung hervorgerufen wird, was die Strömung des Wassers durch die Vorrichtung hindurch verhindert und wodurch erreicht wird, daß strömungsabwärts der Druck nicht den Wert P1 übersteigt (maximal zulässig), so daß keine Gefahren für Schäden oder Unfälle aufgrund dieser Tatsache bestehen. Wenn trotzdem der Druck in der Kompressionskammer über den Wert von P1 ansteigt und den Sicherheitswert P3 erreicht (für den die zweite Druckfeder ausgelegt ist) so wird das mit Öffnungen versehene Verschlußelement strömungsabwärts verschoben und ruft den Verschluß des Durchlasses des rohrförmigen Körpers hervor und verhindert, daß der Überdruck sich strömungsabwärts von der Vorrichtung fortsetzt. Diese Betätigung ist mit einer elektrischen Sicherung vergleichbar, insoweit als die Vorrichtung eine Drucksperre ausbildet und blockiert werden kann, wenn der Innendruck die Werte überschritten hat, die für die ersten und zweiten Druckfedern festgelegt sind.

Es sei die große Einfachheit der Vorrichtung hervorgehoben, die eine kompakte Konstruktion mit stark verringerter Größe (in der Nähe des Durchmessers einer Haushalts-Rohrleitung) ermöglicht, und die aus Metall oder Kunststoff (für leichte Installationen) hergestellt werden kann, und die sehr einfach in jede Wasserleitung installiert werden kann.

Zum besseren Verständnis der Eigenart der vorliegenden Erfindung ist in den beigefügten Zeichnungen eine bevorzugte gewerbliche Ausführungsform gezeigt, die lediglich erläuternd und nicht beschränkend ist.

Die Figur 1 zeigt die erfindungsgemäße Vorrichtung im Längsschnitt und bei Installation in einer Wasserleitung zwischen ersten (2) und zweiten (3) Wasserleitungen.

Die Figur 2 ist der in Figur 1 gezeigte Schnitt II-II.

Die Figur 3 ist der in Figur 2 gezeigte Schnitt III-III.

Die Figuren 4, 5 und 6 zeigen verschiedene Funktionsfälle, die der in Figur 1 gezeigten Vorrichtung entsprechen, wobei jedoch die ersten (2) und zweiten (3) Wasserleitungen fortgelassen sind.

In diesen Figuren sind die folgenden Bezugsziffern angegeben:
1.- Rohrförmiger Körper
2.- Erste Wasserleitung
3.- Zweite Wasserleitung
4.- Rohrförmiger Kolben
5.- Mit Öffnungen versehenes Verschlußelement
6.- Erste Druckfeder
7.- Rohrförmige Kolbenstange (4)
8.- Abdeckkappe
9.- Verschlossener Boden der Abdeckkappe (8)
10.- Seitliche Bohrungen der Abdeckkappe (8)
11.- Erster O-Ring-Dichtung
12.- Zweite Druckfeder
13.- Verschlußfläche des mit Öffnungen versehenen Verschlußelementes (5)
14.- Durchlaß des rohrförmigen Körpers (1)
15.- Zweite O-Ring-Dichtung in dem mit Öffnungen versehenen Verschlußelement (5)
16.- Seitliche Öffnungen des mit Öffnungen versehenen Verschlußelementes (5)
17.- Druckkammer

### Erläuterung einer bevorzugten Ausführungsform

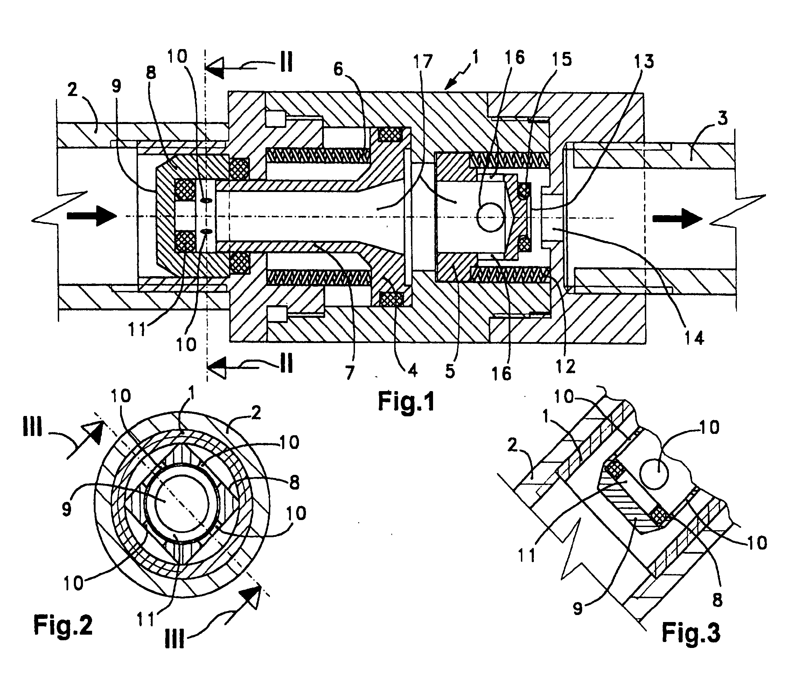

In den beigefügten Zeichnungen ist eine bevorzugte Ausführungsform einer Sicherheitsvorrichtung gegen Überdrücke in Wasserleitungen gezeigt, die, wie dies klar in den Figuren 1 bis 3 gezeigt ist, einen rohrförmigen Körper (1) umfaßt, der an seinen Enden mit Verbindungseinrichtungen für eine erste strömungsaufwärts gelegene Wasserleitung (2) und eine zweite strömungsabwärts gelegene Wasserleitung (3) versehen ist, wobei der rohrförmige Körper (1) in seinem Inneren einen strömungsaufwärts gelegenen rohrförmigen Kolben (4) und ein strömungsabwärts gelegenes, mit Öffnungen versehenes Verschlußelement (5) enthält, die unabhängig voneinander gleitend und unter Abdichtung gegenüber dem rohrförmigen Körper (1) beweglich eingebaut sind. Der rohrförmige Kolben (4) ist gegen eine erste strömungsaufwärts gelegene Druckfeder (6) eingebaut und weist eine Kolbenstange (7) auf, die strömungsaufwärts gleitend im Inneren einer Verschlußkappe (8) beweglich ist, die in den rohrförmigen Körper (1) eingesetzt ist und strömungsaufwärts einen geschlossenen Boden (9) und seitliche Bohrungen (10) aufweist, die mit der ersten Wasserleitung (2) in Verbindung stehen und die an ihrem strömungsabwärts gelegenen Ende mit der Ruhestellung oder der am weitesten strömungsabwärts gelegenen Stellung des freien Endes der Kolbenstange (7) des rohrförmigen Kolbens (4) ausgerichtet sind, der einen Betriebshub aufweist, der größer als die seitlichen Bohrungen (10) ist, wobei strömungsabwärts von diesen seitlichen Bohrungen (10) eine erste O-Ring-Dichtung (11) eingefügt ist, die gegen den verschlossenen Boden (9) der Verschlußkappe (8) anliegt. Das mit Öffnungen versehene Verschlußelement (5) ist gegen eine zweite strömungsabwärts gelegene Druckfeder (12) eingebaut und weist eine Verschlußfläche (13) auf, die über eine zweite O-Ring-Dichtung (15), die in die Verschlußfläche eingefügt ist, gegenüber einem Durchlaß des rohrförmigen Körpers (1) wirkt, der mit der zweiten Wasserleitung (3) in Verbindung steht. Das mit Öffnungen versehene Verschlußelement (5) weist seitliche Öffnungen (16) auf, die mit der zweiten Wasserleitung (3) über den Durchlaß (14) des rohrförmigen Körpers (1) in Verbindung stehen. Der rohrförmige Körper (1), der rohrförmige Kolben (4), das mit Öffnungen versehene Verschlußelement (5) und die Verschlußkappe (8) umgrenzen im Inneren eine Druckkammer (17), die gleichzeitig mit den ersten (2) und zweiten (3) Wasserleitungen über die seitlichen Bohrungen (10), die seitlichen Öffnungen (16) und den Durchlaß (14) in Verbindung steht. Die ersten (6) und zweiten (12) Druckfedern sind in Abhängigkeit von jeweiligen vorher festgelegten Wasserdruckwerten in der Kammer (17) abgeglichen, wobei die erste Feder (6) für einen Wasserdruck P2 unterhalb eines Druckes P1 mit einem durch Normen festgelegten maximalen Wert ausgelegt ist, während die zweite Feder (12) für einen Wasserdruck P3 mit einem Wert ausgelegt ist, der größer als P2 und kleiner als der maximale Wert ist, der für die Elemente der Wasserleitung strömungsabwärts zulässig ist.

In der Figur 1 ist der anfängliche Ruhezustand (oder der Zustand bei niedrigem Druck) gezeigt, in dem sich der rohrförmige Kolben (4) in seiner am weitesten strömungsabwärts gelegenen Position befindet, wobei die erste Druckfeder (16) maximal entspannt ist, während das mit Öffnungen versehene Verschlußelement (5) sich in seiner am weitesten strömungsaufwärts gelegenen Position befindet, die durch die maximale Entspannung der zweiten Druckfeder (12) bestimmt ist. In diesem Zustand gelangt das Wasser, das über die erste Wasserleitung (2) zugeführt wird, durch die seitlichen Bohrungen (10) der Verschlußkappe (8) hindurch in die Druckkammer (17) und erreicht über die seitlichen Öffnungen (16) des mit Öffnungen versehenen Verschlußelementes (5) und den Durchlaß (14) des rohrförmigen Körpers (1) die zweite Wasserleitung (3). Es sei angenommen, daß strömungsaufwärts von der Vorrichtung ein Speisedruck P1 vorliegt, daß die erste Druckfeder (6) für einen Druck P2 (kleiner als P1) in der Druckkammer (17) ausgelegt ist, und daß die zweite Druckfeder (12) für einen Druck P3 (größer als P2) ausgelegt ist, oberhalb dessen die Gefahr eines Schadens in der strömungsabwärts gelegenen Leitung besteht.

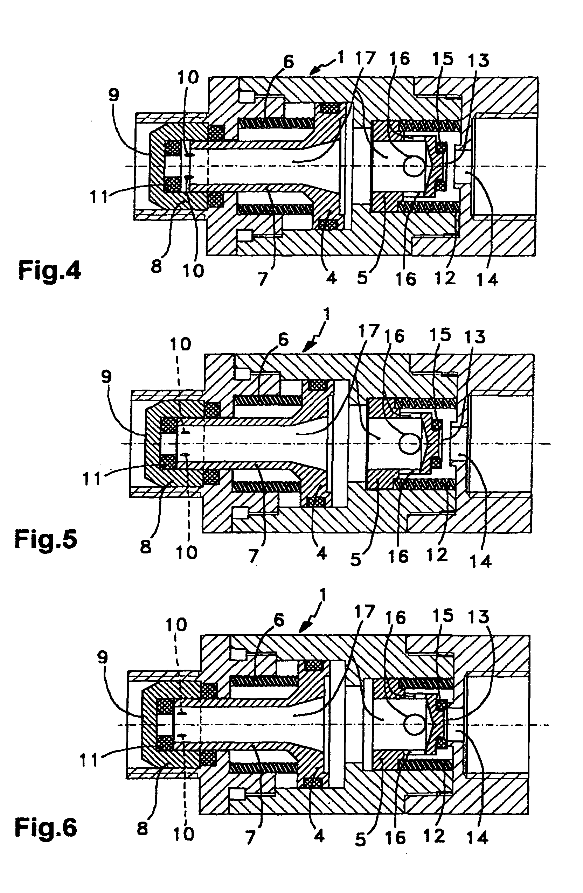

In Figur 4 ist ein Funktionszustand gezeigt, in der der Druck P1 etwas größer als P2 ist, für den die erste Druckfeder (6) ausgelegt ist, wobei die seitlichen Bohrungen (10) der Verschlußkappe (8) teilweise durch die Kolbenstange (7) des rohrförmigen Kolbens (4) verschlossen sind, wodurch eine geregelte Absenkung des Druckes in der Druckkammer (17) hervorgerufen wird, angepaßt an den Druck P1.

In Figur 5 ist der Zustand gezeigt, in der der Wert von P1 den Wert, für den die erste Druckfeder (6) ausgelegt ist, stark übersteigt, so daß die seitlichen Bohrungen (10) vollständig verschlossen werden und die Kolbenstange (7) gegen die erste O-Ring-Dichtung (11) drückt, so daß vollständig der Eintritt des Wassers verhindert wird, selbst wenn ein Spiel zwischen der Kolbenstange (7) und der Seitenwand der Verschlußkappe (8) besteht.

In Figur 6 ist der Zustand dargestellt, in dem aus irgendeinem Grund der Druck P2 den Sicherheitswert übersteigt, für den die zweite Druckfeder (12) ausgelegt ist, worauf das mit Öffnungen versehene Verschlußelement strömungsabwärts bewegt wird, bis über die zweite O-Ring-Dichtung (15) der Durchlaß (14) verschlossen ist und die Vorrichtung eine Sperre bildet, die die Überdrücke von der strömungsabwärts gelegenen Leitung nach Art einer elektrischen Sicherung isoliert.

## Patentansprüche

1. Sicherheitsvorrichtung für Wasserleitungen, zum Schutz gegen Wasserüberdrücke welche einen rohrförmigen Körper (1) umfaßt, der an seinen Enden mit Verbindungseinrichtungen für eine erste strömungsaufwärts gelegene Wasserleitung (2) und eine zweite strömungsabwärts gelegene Wasserleitung (3) versehen ist, wobei der rohrförmige Körper (1) in seinem Inneren strömungsaufwärts einen rohrförmigen Kolben (4) aufweist wobei der rohrförmige Kolben (4) gegen eine erste strömungsaufwärts gelegene Druckfeder (6) angeordnet ist und eine Kolbenstange (7) aufweist, **dadurch gekennzeichnet, daß** sie strömungsabwärts ein mit Öffnungen versehenes Verschlußelement (5) aufweist, und daß der Kolben (4) und das Verschlußelement (5) unabhängig voneinander leitend und abgedichtet beweglich gegenüber dem rohrförmigen Körper (1) eingebaut sind, daß die Kolbenstange (9) strömungsaufwärts gleitend beweglich im Inneren einer Abdeckkappe (8) angeordnet ist, die in den rohrförmigen Körper (1) eingesetzt ist und strömungsaufwärts einen geschlossenen Boden (9) und seitliche Bohrungen (10) aufweist, die mit der ersten Wasserleitung (2) in Verbindung stehen und die an ihrem strömungsabwärts gelegenen Ende mit der Ruhestellung oder der am weitesten strömungsabwärts gelegenen Stellung des freien Endes der Kolbenstange (7) des rohrförmigen Kolbens (4) ausgerichtet sind, der einen Betriebshub aufweist, der größer als die seitlichen Bohrungen (10) ist, daß strömungsabwärts von diesen seitlichen Bohrungen (10) eine erste O-RingDichtung (11) eingefügt ist, die an dem geschlossenen Boden (9) der Abdeckkappe (8) eingesetzt ist, daß das mit Öffnungen versehene Verschlußelement (5) gegen eine zweite strömungsabwärts gelegene Druckfeder (12) eingebaut ist und eine Verschlußfläche (13) aufweist, die über in eine in diese eingefügte zweite O-RingDichtung (15) gegenüber einem Durchlaß des rohrförmigen Körpers wirkt, der mit der zweiten Wasserleitung (3) verbunden ist, wobei das mit Öffnungen versehene Verschlußelement (5) seitliche Öffnungen (16) aufweist, die mit der zweiten Wasserleitung (3) über den Durchlaß (14) des rohrförmigen Körpers (1) in Verbindung stehen, daß der rohrförmige Körper (1), der rohrförmige Kolben (4), das mit Öffnungen versehene Verschlußelement (5) und die Abdeckkappe (8) im Inneren eine Druckkammer (17) begrenzen, die gleichzeitig mit den ersten (2) und zweiten (3) Wasserleitungen in Verbindung steht, und daß die ersten (6) und zweiten (12) Druckfedern entsprechend jeweiligen vorher festgelegten Wasserdrücken in der Kammer (17) ausgelegt sind, wobei die erste Feder (6) für einen Wasserdruck P2 kleiner als ein Druck P1 mit einem maximalen durch Normen festgelegten Wert ausgelegt ist, während die zweite Feder (12) für einen Wasserdruck P3 mit einem Wert oberhalb von P2 und kleiner als dem maximal zulässigen Wert für die Elemente der Wasserleitung strömungsabwärts ausgelegt ist.

2. Sicherheitsvorrichtung für Wasserleitungen nach dem vorhergehenden Anspruch, **dadurch gekennzeichnet, daß** die Abdeckkappe (8) einen vieleckigen Umriß aufweist, wobei in den ebenen Seiten hiervon die seitlichen Bohrungen (10) angeordnet sind.

## Claims

1. A safety device for water pipes for affording protection from excess water pressures including a tubular body (1) which is provided at its ends with connecting devices for a first water pipe (2) disposed upstream and a second water pipe (3) disposed downstream, wherein in its interior the tubular body (1) has a tubular piston (4) upstream, wherein the tubular piston (4) is arranged against a first compression spring (6) disposed upstream and has a piston rod (7), **characterised in that** it has downstream a closure element (5) provided with openings and that the piston (4) and the closure element (5) are installed slidably independently of each other and movably in sealed relationship with respect to the tubular body (1), that the piston rod (7) is arranged upstream slidably movably in the interior of a cover cap (8) which is fitted into the tubular body (1) and upstream has a closed end portion (9) and lateral bores (10) which are in communication with the first water pipe (2) and which at their downstream end are aligned with the rest position or the position furthest downstream of the free end of the piston rod (7) of the tubular piston (4) which has an operating stroke which is greater than the lateral bores (10), that inserted downstream of said lateral bores (10) is a first O-ring seal (11) which is fitted at the closed end portion (9) of the cover cap (8), that the closure element (5) provided with openings is installed against a second compression spring (12) disposed downstream and has a closure surface (13) which acts by way of a second O-ring seal (15) inserted thereinto against a through passage in the tubular body which is connected to the second water pipe (3), wherein the closure element (5) provided with openings has lateral openings (16) which are in communication with the second water pipe (3) by way of the through passage (14) in the tubular body (1), that the tubular body (1), the tubular piston (4), the closure element (5) provided with openings and the cover cap (8) define in the interior a pressure chamber (17) which is in communication simultaneously with the first (2) and second (3) water pipes, and that the first (6) and second (12) compression springs are designed in accordance with respective previously specified water pressures in the chamber (17), wherein the first spring (6) is designed for a water pressure P2 lower than a pressure P1 with a maximum value which is specified by standards while the second spring (12) is designed for a water pressure P3 with a value above P2 and less than the maximum admissible value for the elements of the water pipe downstream.

2. A safety device for water pipes according to the preceding claim **characterised in that** the cover cap (8) is of a polygonal contour, wherein the lateral bores (10) are arranged in the flat sides thereof.

## Revendications

1. Dispositif de sécurité pour des conduites d'eau, pour la protection à l'encontre de surpressions hydrauliques, qui comprend un corps tubulaire (1) doté à ses extrémités de moyens de liaison pour une première conduite d'eau (2) disposée en amont et pour une seconde conduite d'eau (3) disposée en aval, ledit corps tubulaire (1) comprenant à l'intérieur et en amont un piston (4) de forme tubulaire, ledit piston tubulaire (4) étant agencé contre un premier ressort de compression (6) disposé en amont et comportant une tige de piston (7), **caractérisé en ce que** ledit dispositif comprend en aval un élément obturateur (5) pourvu d'ouvertures, et **en ce que** le piston (4) et l'élément obturateur (5) sont intégrés de façon mobile par rapport au corps tubulaire (1) de manière étanchée et en coulissement indépendamment l'un de l'autre, **en ce que** la tige de piston (7) est agencée en amont et mobile en coulissement à l'intérieur d'un capuchon de recouvrement (8) qui est mis en place dans le corps tubulaire (1) et présente en amont un fond fermé (9) et des perçages latéraux (10) qui communiquent avec la première conduite d'eau (2) et qui sont dirigés à leurs extrémités disposées côté aval en alignement avec la position de repos, ou encore la position disposée le plus loin possible en aval, de l'extrémité libre de la tige de piston (7) du piston tubulaire (4), lequel présente une course de fonctionnement qui est plus grande que les perçages latéraux (10), **en ce qu'**il est prévu en aval de ces perçages latéraux (10) un premier joint torique (11) mis en place contre le fond fermé (9) du capuchon de fermeture (8), **en ce que** l'élément obturateur (5) doté d'ouvertures est monté contre un second ressort de compression (12) disposé en aval et présente une surface d'obturation (13) qui, par l'intermédiaire d'un second joint torique (15) inséré dans cette surface, agit vis-à-vis d'une traversée du corps tubulaire, laquelle est reliée à la seconde conduite d'eau (3), dans lequel l'élément obturateur (5) pourvu d'ouvertures présente des ouvertures latérales (16) qui communiquent avec la seconde conduite d'eau (3) via la traversée (14) du corps tubulaire (1), **en ce que** le corps tubulaire (1), le piston tubulaire (4), l'élément obturateur (5) pourvu d'ouvertures, et le capuchon de recouvrement (8) délimitent à l'intérieur une chambre à pression (17) qui communique simultanément avec la première conduite d'eau (2) et la seconde conduite d'eau (3), et **en ce que** le premier ressort de compression (6) et le second ressort de compression (12) sont conçus en correspondance de pressions hydrauliques respectives préalablement fixées dans la chambre (17), le premier ressort (6) étant conçu pour une pression hydraulique (P2) inférieure à une pression (P1) avec une valeur maximum fixée par des normes, alors que le second ressort (12) est conçu pour une pression hydraulique (P3) avec une valeur supérieure à (P2) et inférieure à la valeur admissible maximum pour les éléments de la conduite d'eau en aval.

2. Dispositif de sécurité pour conduite d'eau selon la revendication précédente, **caractérisé en ce que** le capuchon de recouvrement (8) présente un contour polygonal, dans lequel les perçages latéraux (10) sont ménagés dans les côtés plans de ce contour.
